# FASCICULE DE BREVET EUROPEEN

(11) **EP 2 772 802 B1**
(45) Date de publication et mention de la délivrance du brevet: **17.08.2016**
(21) Numéro de dépôt: 14155467.5
(22) Date de dépôt: 17.02.2014
(51) Int. Cl.: G03F 7/20, G03F 1/72, G03F 1/84

(54) **Procédé de photolithographie à double masque minimisant l'impact des défauts de substrat**
Fotolithografieverfahren mit Doppelmaske, bei dem die Auswirkung von Substratfehlern minimiert ist
Dual-mask photolithography method minimising the impact of substrate defects

(30) Priorité: 28.02.2013 FR 1351759
(43) Date de publication de la demande: 03.09.2014
(73) Titulaire: Commissariat à l'Energie Atomique et aux Energies Alternatives, 75015 Paris (FR)
(72) Inventeur: VanNuffel, Cyril, 38950 Saint-Martin-le-Vinoux (FR); Imbert, Jean-Louis, 38170 Seyssinet (FR)
(74) Mandataire: Priori, Enrico

(56) Documents cités:
- US-A- 5 795 685
- US-A1- 2006 093 924
- US-A1- 2007 158 636
- ABDE ALI KAGALWALLA ET AL: "Design-Aware Defect-Avoidance Floorplanning of EUV Masks", IEEE TRANSACTIONS ON SEMICONDUCTOR MANUFACTURING, IEEE SERVICE CENTER, PISCATAWAY, NJ, US, vol. 26, no. 1, 30 janvier 2013 (2013-01-30), pages 111-124, XP011491658, ISSN: 0894-6507, DOI: 10.1109/TSM.2012.2234151

## Description

L'invention concerne la fabrication de masques de photolithographie. La photolithographie en extrême ultraviolet (EUV) est plus particulièrement concernée. Les longueurs d'onde considérées sont inférieures à 20 nanomètres et sont typiquement de 13,5 nm ou 6,8 nm. L'utilisation de ces longueurs d'onde est destinée à réaliser des motifs de plus petites dimensions que ceux que permet la photolithographie en lumière visible ou en ultraviolet profond (DUV), mais l'invention s'applique à n'importe quelle longueur d'onde.

La particularité des masques EUV est qu'ils sont utilisés en réflexion et non en transmission. Ils sont réfléchissants pour la longueur d'onde EUV utile, c'est-à-dire celle qui sera utilisée pour les opérations de photolithographie avec ce masque. Les masques EUV binaires portent par ailleurs un motif de zones absorbantes pour la longueur d'onde EUV utile. Des masques EUV à décalage de phase portent un motif de zones déphasantes. Pour simplifier les explications, on considérera dans la suite que les masques sont des masques binaires, bien que l'invention s'applique aussi aux masques à décalage de phase.

En utilisation, le masque est éclairé par une lumière EUV et réfléchit ce rayonnement, sauf dans les zones absorbantes où la lumière est absorbée et ne peut pas être renvoyée. L'éclairement EUV à une longueur d'onde bien déterminée est modulé spatialement par ce motif et est projeté par une optique de focalisation à miroirs sur une surface à exposer. La surface à exposer est une couche de résine sensible aux EUV, déposée sur un substrat plan. Cette couche recouvre les couches qu'on veut graver ou traiter (par exemple implanter) après exposition de la résine au rayonnement EUV. Après développement chimique de la résine, on aboutit à une structure dans laquelle les couches à graver ou à implanter sont recouvertes d'un motif de résine qui protège certaines zones et découvre d'autres zones.

L'optique de projection réduit l'image et permet de définir dans la résine des motifs plus petits que ceux qui sont gravés sur le masque. Le rapport de réduction est en général de quatre. Le masque est fabriqué en général à partir d'un procédé d'écriture par faisceau électronique.

Typiquement, un masque en réflexion de type masque binaire est composé d'un substrat plan à faible coefficient de dilatation, recouvert d'une structure réfléchissante ; la structure réfléchissante est le plus souvent un miroir de Bragg c'est-à-dire une structure à multiples couches transparentes d'indices de réfraction différents. Les épaisseurs de ces couches sont calculées en fonction des indices, de la longueur d'onde, et de l'angle d'incidence du faisceau EUV, pour que les différentes interfaces, partiellement réfléchissantes, renvoient des ondes lumineuses en phase les unes avec les autres. Le miroir est recouvert d'une couche absorbante gravée selon le motif de masquage désiré, de sorte que le masque comprend des zones réfléchissantes (le miroir non recouvert d'absorbant) et des zones absorbantes (le miroir recouvert d'absorbant). A titre d'exemple, pour une longueur d'onde de 13,5 nm et un angle d'incidence de 6 degrés, on utilisera une quarantaine de couches de silicium d'épaisseur 41,5 angströms (1 angström = 0,1 nm) alternées avec une quarantaine de couches de molybdène d'épaisseur 28 angströms. Les zones absorbantes peuvent être constituées de chrome (entre autres) déposé sur le miroir ; par exemple une couche de 600 angströms de chrome placée sur le miroir ci-dessus ne réfléchit plus que 1 % de la lumière incidente.

Le substrat portant sur toute sa surface un miroir multicouches et une couche absorbante uniforme (donc non encore gravée) est appelé "blanc de masque" (en anglais : "mask blank"). Le blanc de masque est gravé selon un motif désiré pour constituer un masque de photolithographie EUV. La petite taille des motifs de masquage à réaliser par la photolithographie EUV fait que des défauts du blanc de masque peuvent engendrer des défauts rédhibitoires de la structure photolithographiée. Des petits défauts de quelques dizaines de nanomètres de dimension sur le masque peuvent se traduire par des motifs indésirables pouvant aboutir à des structures inutilisables.

Les défauts du blanc de masque peuvent provenir de défauts à la surface du blanc de masque, ou encore des défauts introduits pendant la formation des couches multiples du miroir de Bragg, ou enfin des défauts de surface du substrat sous-jacent lui-même, tels que des rayures, des trous, des bosses, défauts qui se propagent dans la structure multicouches et se retrouvent comme des défauts du miroir. Les défauts sont des défauts d'amplitude (zones absorbante qui ne devrait pas l'être ou réciproquement), ou des défauts de phase optique (introduction d'un déphasage intempestif lorsque la lumière de photolithographie pénètre dans les couches du masque, détériorant localement le coefficient de réflexion).

Pour donner un ordre de grandeur : un objectif est de réaliser un masque ayant un nombre de défauts de taille 60 nanomètres ou au-dessus inférieur à 0,01 défaut par cm². Cependant les technologies existantes ne le permettent pas à ce jour.

On a déjà proposé de corriger les défauts de la manière suivante : on réalise une cartographie individuelle des défauts de chaque blanc de masque devant servir à fabriquer la série de masques nécessaires à la production d'une structure (par exemple une tranche semiconductrice portant de multiples circuits de microélectronique). Il faut plusieurs masques correspondant aux différents niveaux de gravure ou implantations à réaliser sur la structure. Les défauts d'une série de blancs de masque sont détectés en utilisant le matériel du commerce, la position et la taille des défauts sur chaque blanc de masque sont notées.

Un logiciel détermine quels blancs de masque sont utilisables pour les différents masques, compte-tenu des schémas d'implantation ou "layout" des différents niveaux du circuit à réaliser, en prévoyant des petits décalages en X ou en Y ou des petites rotations des masques pour que les défauts éventuels des blancs de masque soient déplacés en dehors des dessins de la structure (au moins en dehors des zones les plus critiques des dessins).

Les documents US 2006/093924 A1 et US 5 795 685 A divulguent de compenser les défauts d'un masque par un procédé comportant les étapes suivantes: produire un premier masque pouvant avoir des défauts sur un premier blanc, établir une cartographie individuelle des positions des défauts du premier masque à l'aide d'une machine d'inspection; pour chaque défaut, définir une zone d'exclusion autour du défaut, et occulter les zones d'exclusion en fonction du motif de dessin désiré et en fonction des règles de dessin; et produire un deuxième dessin de masque sur un deuxième blanc de masque, le deuxième dessin de masque comportant un motif de dessin complémentaire comprenant, dans des zones associées aux zones d'exclusion, des portions du motif de dessin désiré, le reste du deuxième dessin de masque étant noir; enfin effectuer sur la surface à exposer une étape de photolithographie avec le deuxième dessin de masque, en superposant sur la surface à exposer les zones d'exclusion du premier dessin et les zones associées du deuxième dessin.

Les documents Abde et al: "Design-Aware Defect-Avoidance Floorplanning of EUV Masks", IEEE TRANSACTIONS ON SEMICONDUCTOR MANUFACTURING, vol. 26, no. 1 (2013-01-30), pages 111-124 et US 2007/158636 A1 divulguent de compenser les défauts d'un blanc de masque en effectuant une translation et/ou une rotation de l'ensemble des motifs du masque selon la cartographie individuelle des positions des défauts du blanc de masque afin que les motifs, dans leur emplacement définitif, couvrent les défauts du blanc de masque.

Dans le cas où le nombre de défauts par masque reste élevé, il est difficile par cette méthode de trouver une solution qui aboutisse à les placer tous dans une zone absorbante, car il y a une faible probabilité pour que les différents défauts d'un masque puissent être localisés tous dans des endroits non critiques alors qu'on ne dispose que de deux degrés de liberté en translation X, Y dans le plan du masque et un degré de liberté en rotation dans ce plan.

Pour mieux éviter la conséquence de ces défauts, l'invention propose un procédé de photolithographie caractérisé en ce qu'il comporte les étapes suivantes, pour une opération de photolithographie donnée sur une surface à exposer selon un motif de dessin désiré : on produit un premier blanc de masque pouvant avoir des défauts, on établit une cartographie individuelle des positions des défauts du premier blanc de masque à l'aide d'une machine d'inspection ; pour chaque défaut, on définit une zone d'exclusion autour du défaut, et, en fonction du motif de dessin désiré et en fonction de règles de dessin, on produit un premier dessin de masque sur le premier blanc de masque, le premier dessin comportant le motif de dessin désiré, sauf dans les zones d'exclusion, celles-ci étant noires, et on produit un deuxième dessin de masque sur un deuxième blanc de masque ou sur le premier blanc de masque, le deuxième dessin de masque comportant un motif de dessin complémentaire comprenant, dans des zones associées aux zones d'exclusion, des portions du motif de dessin désiré, le reste du deuxième dessin de masque étant noir ; enfin on effectue sur la surface à exposer une étape de photolithographie avec le premier dessin de masque et une étape de photolithographie avec le deuxième dessin de masque, en superposant sur la surface à exposer les zones d'exclusion formées dans le premier dessin et les zones associées formées dans le deuxième dessin.

Par conséquent, au lieu d'utiliser un masque par opération de photolithographie, on utilise deux masques complémentaires (qu'ils soient sur un même blanc de masque pour des motifs de dessin pas trop grands ou sur deux blancs de masque différents pour des motifs de dessin plus grands) et on expose deux fois de suite la surface à traiter : d'abord avec l'un des masques (ou l'un des dessins de masque) puis avec l'autre. Les masques ou dessins de masque sont complémentaires en ce sens que l'un expose la partie de surface qui n'est pas exposée par l'autre, sans recouvrement ou avec seulement un très petit recouvrement permettant d'assurer qu'il n'y ait pas de manque dans l'exposition. L'un des masques (ou l'un des dessins de masque) assure l'exposition selon le motif désiré, partout sauf dans les zones d'exclusion définies en fonction des défauts inhérents à ce masque, c'est-à-dire les défauts du blanc de masque qui a servi à faire ce premier masque ; l'autre masque (ou l'autre dessin de masque) assure l'exposition selon le motif désiré, uniquement dans les zones d'exclusion définies par les défauts du premier blanc de masque.

De préférence, s'il y a deux blancs de masque, on effectue aussi une cartographie des défauts du deuxième blanc de masque et on vérifie que les défauts du deuxième blanc de masque ne se trouvent pas dans une zone d'exclusion du premier blanc de masque.

Si le traitement d'une surface nécessite N opérations de photolithographie, on peut faire la même chose pour chacune des N opérations, c'est-à-dire produire 2N masques complémentaires là où on n'en utiliserait normalement que N.

La partition entre les deux zones est exécutée par un logiciel de traitement des dessins de masque. Le logiciel contient un fichier décrivant le motif de dessin désiré ; on introduit dans le logiciel la position de chacun des défauts du premier blanc de masque ; le logiciel calcule les zones d'exclusion autour de chaque défaut et il établit un premier fichier de dessin correspondant au premier masque (ou au premier dessin de masque si l'on n'utilise qu'un seul blanc de masque) et un deuxième fichier de dessin correspondant au deuxième masque (ou au deuxième dessin de masque) ; l'établissement des deux fichiers complémentaires prend en compte des règles de dessin, telles que l'établissement d'une zone d'exclusion de taille variable en fonction de la taille du défaut constaté ; ou encore des règles de dessin liées au dessin à réaliser lui-même ; par exemple il impose de ne pas faire une partition qui couperait une zone active telle que la grille ou le canal d'un transistor, ou la source ou le drain.

D'autres caractéristiques et avantages de l'invention apparaîtront à la lecture de la description détaillée qui suit et qui est faite en référence aux dessins annexés dans lesquels :
- la figure 1 représente une structure de masque EUV binaire portant un motif de zones absorbantes ;
- la figure 2 représente en coupe verticale un blanc de masque ;
- la figure 3 représente en vue de dessus un blanc de masque comportant quelques défauts ;
- la figure 4 représente le tracé de zones d'exclusion autour de chacun des défauts constatés dans le blanc de masque ;
- la figure 5 représente symboliquement un dessin de masque à réaliser pour une opération de photolithographie sur une surface à traiter ;
- la figure 6 représente un premier masque, réalisé à partir du blanc de masque de la figure 3, dans lequel les zones d'exclusion sont noires et ne participent donc pas à l'exposition de la surface à traiter, le reste du masque comportant le dessin de masque à réaliser ;
- la figure 7 représente un deuxième masque à utiliser dans la même opération de photolithographie, masque dans lequel seules les zones d'exclusion comportent un motif de dessin, le reste du masque étant noir et ne participant pas à l'exposition de la surface à traiter ;
- la figure 8 représente une mise en oeuvre du procédé avec un seul blanc de masque sur lequel sont formés un premier dessin de masque et un deuxième dessin de masque complémentaire du premier.

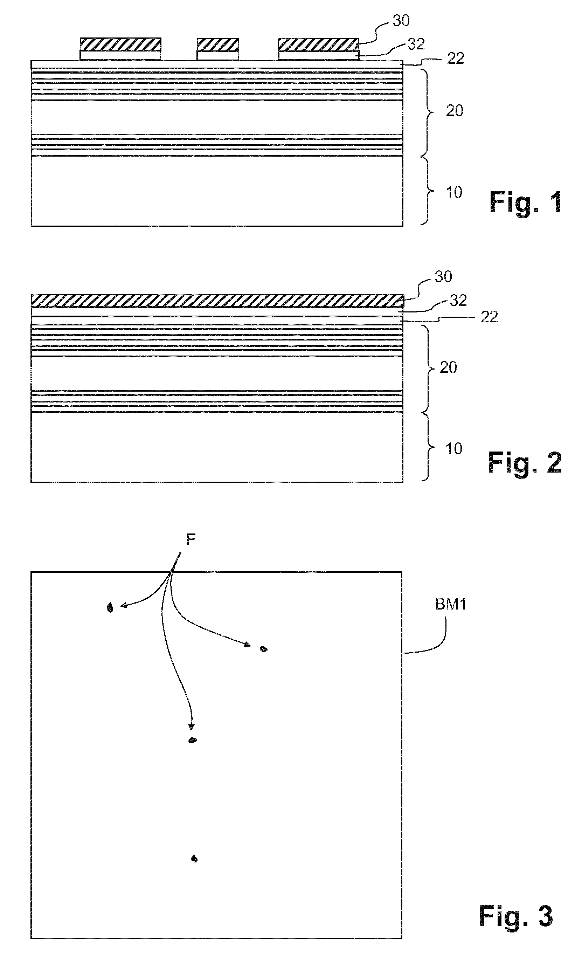

La figure 1 rappelle la structure générale d'un masque binaire de photolithographie en extrême ultraviolet par réflexion.

Le masque comporte un substrat 10 à faible coefficient de dilatation thermique. Il est uniformément recouvert d'un empilement 20 de couches minces formant un miroir de Bragg à la longueur d'onde EUV à laquelle le masque est utilisé et pour l'angle d'incidence (en général environ 6°) de la lumière EUV qui l'éclairera. L'empilement est le plus souvent une alternance de couches de silicium et de molybdène. L'épaisseur des couches de silicium et l'épaisseur des couches de molybdène sont choisies, compte-tenu des indices de réfraction respectifs du silicium et du molybdène, pour établir des interférences constructives de la lumière réfléchie par chaque interface entre deux couches. L'empilement se comporte comme un miroir à fort coefficient de réflexion pour la lumière EUV incidente. Les couches alternées peuvent être protégées par une couche d'encapsulation 22.

L'empilement 20 est recouvert d'une couche 30, absorbante pour la lumière EUV, gravée localement pour définir un motif de photolithographie désiré. La couche absorbante peut être en chrome. Une couche tampon 32 qui peut être en oxyde de silicium peut être prévue entre l'empilement 20 et la couche absorbante 30. La couche tampon sert notamment de couche d'arrêt de gravure pour permettre de graver le motif désiré dans la couche 30 sans endommager la surface du miroir de Bragg.

En fonctionnement, le masque reçoit une lumière en extrême ultraviolet, notamment à 13,5 nm de longueur d'onde, focalisée par un système optique fonctionnant en général en réflexion. Les zones exposées du miroir renvoient la lumière vers une optique de projection qui la projette sur une structure plane portant une couche à photolithographier. Les zones de miroir recouvertes par la couche absorbante ne renvoient pas de lumière. L'optique de projection projette en général une image réduite dans un rapport quatre.

Avant gravure du motif de photolithographie, l'ensemble du substrat 10, du miroir 20, de la couche tampon 32, et de la couche absorbante uniformément déposée est appelé blanc de masque. Un blanc de masque est représenté à la figure 2. Si la surface du blanc de masque comporte des défauts, ces défauts perturbent la qualité du masque final. Les défauts peuvent être en surface (par exemple un trou dans la couche uniforme 30). Des défauts en profondeur, dans l'empilement 20 ou au-dessous de l'empilement 20 ou sur la surface du substrat, se traduisent par des défauts de phase et peuvent également affecter la qualité du masque. Les défauts ne sont pas réparables, ou difficilement réparables, une fois que le masque est réalisé.

On considère aujourd'hui que des défauts de plus de 60 nanomètres de large sont rédhibitoires et qu'un masque ne devrait pas comporter un taux de défauts de cette dimension supérieur à 0,01 par cm².

Pour réaliser une structure complète, par exemple un circuit intégré de microélectronique comportant des couches semiconductrices, conductrices ou isolantes, gravées selon des motifs respectifs, et comportant des zones semiconductrices dopées selon des motifs respectifs d'implantation, on a besoin d'un jeu de N masques (N>1). Les motifs projetés sur la structure par chacun des N masques se superposent très précisément lors des étapes de photolithographies successives, pour aboutir à la constitution de la structure définitive. Le jeu de masques peut comporter à titre d'exemple de 8 à 15 masques pour les niveaux critiques ; les autres niveaux seront réalisés par exemple par lithographie en ultraviolet lointain (DUV, de l'anglais "Deep UltraViolet"), essentiellement pour des raisons économiques.

Pour éviter de produire des masques défectueux, on inspectait en général la surface des blancs de masque avant de les graver et on éliminait les blancs de masque comportant trop de défauts.

Selon l'invention, on réalise encore cette inspection mais on n'élimine pas les blancs de masque comportant des défauts. On réalise une cartographie des défauts du blanc de masque, c'est-à-dire qu'on détermine précisément à l'aide d'une machine d'inspection la position exacte de chacun des défauts ayant une dimension supérieure à une valeur donnée (par exemple 30 nanomètres, mais on pourrait descendre au-dessous si on veut plus de sécurité). La position des défauts est repérée en abscisse et en ordonnée par rapport à une référence du blanc de masque, par exemple par rapport aux bords d'un masque rectangulaire ou à une marque de référence formée sur le masque.

La figure 3 représente en vue de dessus un blanc de masque BM1 avec quelques défauts F ; les positions de ces défauts dans le repère sont notées précisément et introduites dans un logiciel de calcul de dessin qui contient par ailleurs les éléments de description du dessin qu'on souhaite réaliser dans une opération de photolithographie sur une surface sensible à exposer.

Dans l'art antérieur, le logiciel établit un dessin de masque unique qui servira au cours de l'opération de photolithographie. Le dessin du masque est le dessin complet à former sur la surface sensible. On précise ici qu'il peut y avoir des différences entre le dessin à réaliser et le dessin du masque qui sert à former ce dessin, pour diverses raisons technologiques. Parmi ces raisons il y a la nécessité d'introduire dans le dessin du masque des motifs de correction optique de proximité (motifs OPC). On rappelle que les motifs OPC sont des modifications de dessins de masque destinées à compenser les défauts d'exposition dus aux effets de bords sur les limites, les angles, etc. des tracés du dessin. Pour simplifier les explications qui suivent, on considère ici que le dessin DE du masque est globalement le même que le dessin à réaliser. Ce dessin de masque est contenu dans un fichier informatique qui sert à produire le masque à partir du blanc de masque ; ce fichier commande par exemple une machine d'écriture par faisceau électronique.

Dans la présente invention, pour chaque défaut F observé, on définit dans le repère une zone d'exclusion ZE de dimension suffisante pour englober la totalité du défaut.

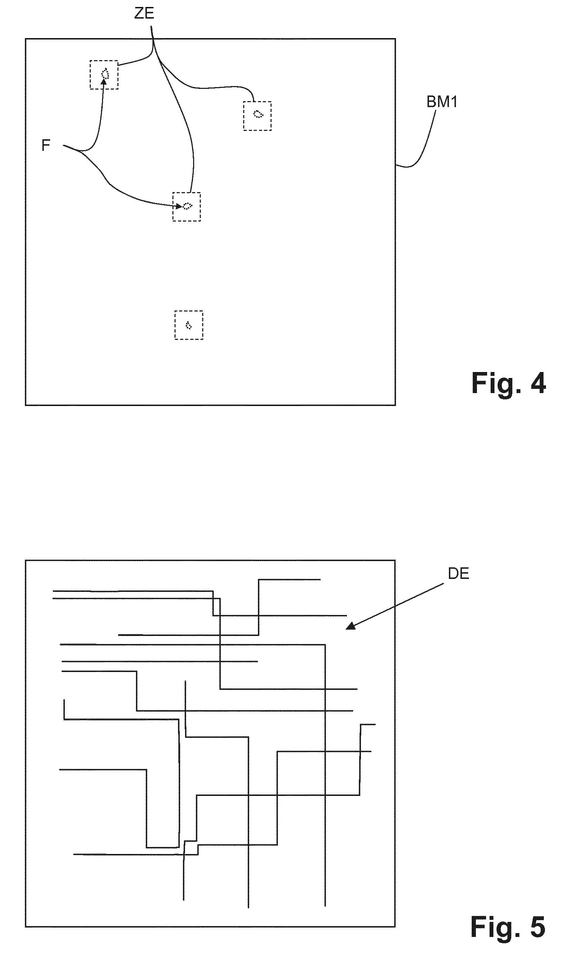

La figure 4 représente le blanc de masque BM1 avec ses défauts, entouré chacun par une zone d'exclusion respective ZE. Pour la lisibilité du dessin, les zones d'exclusion sont représentées avec des dimensions bien supérieures à celles qu'elles ont dans la réalité. Dans la pratique, les défauts sont très petits (quelques centaines de nanomètres au plus) et les zones d'exclusion peuvent être des carrés ou des rectangles de quelques micromètres de côté.

Ces zones d'exclusion vont servir à traiter le fichier du dessin de masque pour produire deux fichiers complémentaires tenant compte des zones d'exclusion.

Ces fichiers complémentaires serviront à produire deux dessins de masque complémentaires qu'on pourra réaliser sur deux blancs de masques séparés ou, comme on le verra plus loin, sur un même blanc de masque lorsque le blanc de masque est assez grand pour contenir au moins deux motifs complets du dessin à réaliser.

On suppose d'abord qu'on utilise deux blancs de masque pour réaliser deux dessins de masque complémentaires.

La figure 5 représente symboliquement un motif de dessin de masque DE à réaliser sur la surface sensible d'une plaquette de silicium. C'est ce dessin, ou plus précisément des descripteurs de ce dessin qui sont contenus dans le fichier initial.

A partir de ce fichier et des coordonnées des défauts du blanc de masque BM1, le logiciel de calcul de dessin établit deux dessins de masque complémentaires M1 et M2. Le premier dessin de masque M1 est fait sur un blanc de masque BM1. Le deuxième est fait sur un autre blanc de masque BM2. De préférence, on effectue une inspection du deuxième masque et on vérifie que le deuxième blanc de masque n'a pas des défauts aux mêmes endroits que le premier. On pourrait à la rigueur envisager de ne pas vérifier le deuxième blanc de masque car la probabilité qu'il y ait des défauts aux mêmes endroits que sur le premier est faible, mais il est quand même mieux de faire cette vérification et de choisir comme deuxième blanc de masque un autre blanc de masque si on trouve des défauts placés aux mêmes endroits dans les deux blancs de masque.

Les deux fichiers décrivant les masques M1 et M2 sont établis en tenant compte de règles de dessin, et en particulier de règles permettant de tracer les limites des zones d'exclusion autour de chaque défaut.

Le premier fichier comporte un dessin de masque principal M1 qui est le motif de dessin désiré DE dont on a retiré les éléments placés dans les zones d'exclusion ZE ; le dessin devient un dessin DEp qui est le motif désiré mais avec des parties manquantes remplacées par des zones noires ; par zone noire, on entend des zones qui ne participeront pas à l'exposition de la surface à traiter ; dans un masque binaire, ce sont les zones absorbantes du masque.

Le deuxième fichier comporte un dessin de masque M2 qui est essentiellement une zone noire, sauf dans des zones ZEa qui sont identiques en dimensions, et en position dans le dessin, aux zones d'exclusion ZE ; on appellera ces zones ZEa : zones associées aux zones d'exclusion. Le deuxième fichier représente un dessin de masque M2 constitué par les parties manquantes DEz du dessin DE, et ces parties manquantes sont situées dans les zones associées ZEa ; tout le reste du fichier est noir.

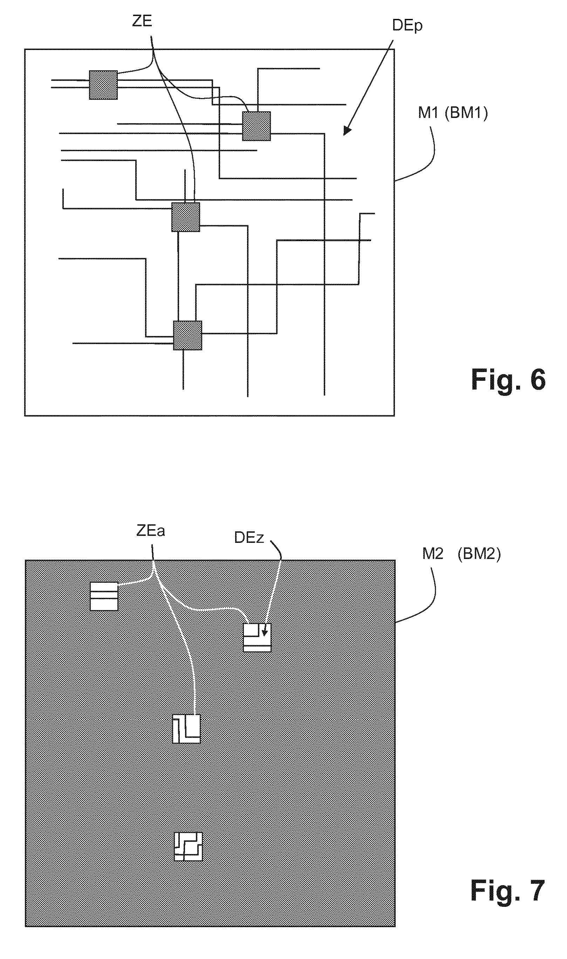

Le masque M1 réalisé à partir du premier fichier et du premier blanc de masque BM1 est représenté sur la figure 6 ; il comprend le dessin principal DEp mais aucun dessin dans les zones d'exclusion ZE, noires. Le masque M2 réalisé à partir du deuxième fichier et du deuxième blanc de masque BM2 est représenté sur la figure 7 ; il comprend un dessin complémentaire DEz réparti uniquement dans les zones d'exclusion ; tout le reste est noir.

Lors de l'opération de photolithographie destinée à exposer la surface à traiter pour y former le dessin DE, on expose successivement cette surface avec les masques complémentaires M1 et M2 (l'ordre est indifférent) en prenant soin d'utiliser le même repère pour aligner la surface à traiter avec chacun des masques. Les zones d'exclusion appartenant au masque M1 et les zones associées aux zones d'exclusion, appartenant au masque M2, sont situés aux mêmes emplacements dans les deux masques ; leurs projections se superposent sur la surface à exposer.

Il peut être avantageux de solidariser les deux masques M1 et M2 sur un même support pour faciliter cet alignement. On peut utiliser une machine d'exposition qui possède un magasin capable de recevoir un masque double M1+M2.

Si la machine d'alignement comporte un double plateau pour recevoir simultanément deux plaquettes de silicium à traiter, on peut par exemple procéder comme suit : pendant que la première plaquette est exposée avec le masque M1, on pré-aligne la deuxième plaquette. On expose ensuite la deuxième plaquette avec le masque M1. Puis on met en place le masque M2, on expose d'abord la plaquette M1 puis la plaquette M2. Et on recommence la série d'opérations avec un nouveau jeu de deux plaquettes.

Dans la partition du dessin DE en deux fichiers distincts DEp et DEz, on peut utiliser plusieurs types de règles de dessin :
- utilisation de zones d'exclusion ayant une dimension fixe, par exemple 2 micromètres x 2 micromètres ; cette dimension dépend notamment de la précision de la machine de cartographie des défauts, précision qui est typiquement de l'ordre de +/- 1 micromètre ;
- ou utilisation de zones d'exclusion plus grandes si les dimensions du défaut sont plus grandes et plus petites pour des défauts plus petits ;
- utilisation d'une seule zone pour deux défauts proches l'un de l'autre ;
- utilisation de règles de dessin prenant en compte le dessin DE lui-même à réaliser ; dans ce cas on recherchera de préférence des limites de zones d'exclusion qui coupent le moins de lignes de dessin possibles, des limites qui passent entre deux lignes de dessin plutôt que sur une ligne, des limites qui coupent certains motifs mais pas d'autres, etc. Par exemple, on peut interdire de couper le dessin d'une grille de transistor ou une source ou un drain mais autoriser de couper le dessin d'une connexion conductrice.

La forme des zones d'exclusion peut être quelconque. Néanmoins il peut être préférable d'utiliser des zones d'exclusion carrées, rectangulaires, ou plus généralement polygonales (selon les directions principales des lignes du dessin) pour simplifier le programme de calcul des fichiers de dessin DEp et DEz à partir du fichier de dessin DE.

Dans le cas de masques binaires et de masques à décalage de phase, les zones noires correspondent aux zones absorbantes du masque.

Dans le cas où le dessin du masque inclut des motifs de correction optique de proximité (motifs OPC), il peut être souhaitable d'adapter ces motifs sur les deux dessins de masques à l'endroit des limites des zones d'exclusion pour tenir compte du fait que le dessin sera exposé en deux étapes et que l'exposition à l'endroit des limites va être affectée. Le fait de prévoir une exposition en deux temps crée des extrémités de traits là où il ne devrait pas y en avoir, donc un effet de bord supplémentaire à l'endroit de la limite des zones d'exclusion ; on peut en tenir compte pour modifier le dessin à cet endroit pour compenser cet effet comme on le fait pour le reste du dessin. Cette modification peut être faite au voisinage des limites des zones d'exclusion et au voisinage des limites des zones associées.

Dans le cas des figures 6 et 7 on a considéré que le motif de dessin à réaliser DE occupe la quasi-totalité de la surface du masque. Mais si la dimension du masque est suffisante pour contenir deux fois le motif de dessin DE à réaliser, on peut juxtaposer les deux dessins de masque complémentaires M1 et M2 sur un seul blanc de masque BM1.

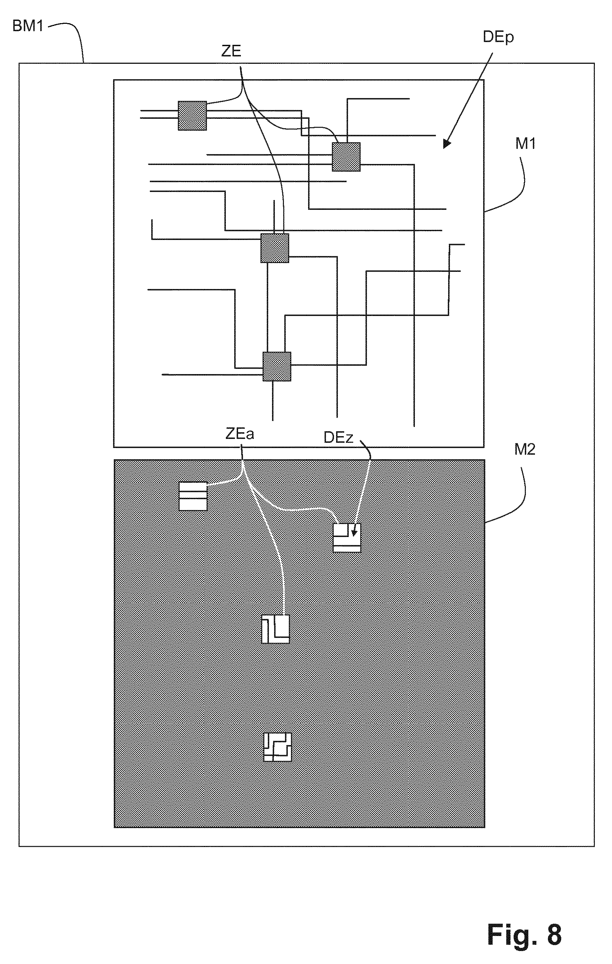

Ce cas est représenté sur la figure 8. Le blanc de masque BM1 comporte deux dessins de masque M1 et M2 qui sont complémentaires et dont les positions relatives sont parfaitement définies pour qu'on puisse superposer ensuite les projections de ces dessins lors des deux étapes de photolithographie ; les zones d'exclusion ZE du premier dessin M1 sont situées aux mêmes endroits relatifs que les zones associées du deuxième dessin M2 ; lors de la projection photolithographique, elles se superposent alors exactement aux zones associées ZEa du deuxième dessin, qui contiennent les motifs de dessin manquants du masque M1.

Il faut de préférence s'assurer que le blanc de masque BM1 ne comporte pas des défauts dans les zones associées ZEa, mais statistiquement c'est peu probable.

Lors de la photolithographie avec le masque unique M1+M2 formé à partir du blanc de masque BM1, on utilise séparément le premier dessin de masque M1 pour projeter le dessin DEp sur la surface à exposer, et le deuxième dessin de masque M2, décalé dans la machine de photolithographie pour le mettre en position de projeter le dessin complémentaire DEz en superposant exactement sur la surface les zones d'exclusion ZE et les zones associées ZEa. L'ordre des étapes est indifférent.

Pour des motifs de dessins encore plus petits, on peut avoir plusieurs couples de dessins complémentaires M1, M2 sur le blanc de masque unique. Les couples peuvent être identiques les uns aux autres (pour une exposition multiple de plusieurs puces) ou différents les uns des autres s'ils correspondent à des étapes de photolithographie différentes ou à des motifs différents à exposer simultanément.

L'avantage de la formation des deux dessins M1 et M2 sur el même blanc de masque est la plus grande précision d'alignement possible lors de la projection, sans qu'il y ait besoin de recourir à un alignement successif de deux masques ou à une solidarisation des deux masques.

## Revendications

1. Procédé de photolithographie **caractérisé en ce qu'**il comporte les étapes suivantes, pour une opération de photolithographie donnée sur une surface à exposer selon un motif de dessin désiré (DE) : on produit un premier blanc de masque (BM1) pouvant avoir des défauts, on établit une cartographie individuelle des positions des défauts (F) du premier blanc de masque à l'aide d'une machine d'inspection ; pour chaque défaut, on définit une zone d'exclusion (ZE) autour du défaut, et, en fonction du motif de dessin désiré et en fonction de règles de dessin, on produit un premier dessin de masque (M1) sur le premier blanc de masque, le premier dessin comportant le motif de dessin désiré, sauf dans les zones d'exclusion, celles-ci étant noires ; et on produit un deuxième dessin de masque (M2) sur un deuxième blanc de masque ou sur le premier blanc de masque, le deuxième dessin de masque comportant un motif de dessin complémentaire comprenant, dans des zones associées aux zones d'exclusion, des portions du motif de dessin désiré, le reste du deuxième dessin de masque étant noir ; enfin on effectue sur la surface à exposer une étape de photolithographie avec le premier dessin de masque et une étape de photolithographie avec le deuxième dessin de masque, en superposant sur la surface à exposer les zones d'exclusion du premier dessin et les zones associées du deuxième dessin.

2. Procédé selon la revendication 1, **caractérisé en ce que** le premier et le deuxième dessin de masque sont formés respectivement sur un premier et un deuxième blancs de masque, les zones associées du deuxième blanc de masque étant aux mêmes emplacements que les zones d'exclusion dans le premier blanc de masque.

3. Procédé selon la revendication 2, **caractérisé en ce qu'**on établit aussi une cartographie des défauts du deuxième blanc de masque et on vérifie que les défauts du deuxième blanc de masque ne se trouvent pas dans une zone d'exclusion du premier blanc de masque.

4. Procédé selon l'une des revendications 2 et 3, **caractérisé en ce que** les deux masques M1 et M2 sont solidarisés sur un même support.

5. Procédé selon la revendication 1, **caractérisé en ce que** le premier et le deuxième dessin de masque sont juxtaposés sur le premier blanc de masque, et le blanc de masque est décalé latéralement entre les deux étapes de photolithographie de manière à superposer sur la surface à exposer les zones d'exclusion du premier dessin de masque et les zones associées du deuxième dessin de masque.

6. Procédé selon l'une des revendications 1 à 5, **caractérisé en ce que** le premier et le deuxième dessin de masque sont produits respectivement à partir d'un premier fichier de dessin et d'un deuxième fichier de dessin, ces deux fichiers étant établis à partir d'un même fichier contenant le motif de dessin désiré (DE) et à partir de la position de chacun des défauts (F) constatés sur le premier blanc de masque.

7. Procédé selon la revendication 6, **caractérisé en ce que** le premier et le deuxième fichiers sont établis en prenant en compte des règles de dessin, et parmi ces règles une règle de choix de dimensions de zone d'exclusion en fonction de la taille du défaut observé.

8. Procédé selon l'une des revendications 6 et 7, **caractérisé en ce que** le premier et le deuxième fichiers sont établis en prenant en compte des règles de dessin liées au dessin à réaliser lui-même.

9. Procédé selon la revendication 8, **caractérisé en ce que** le premier et le deuxième fichiers sont établis avec une règle imposant que les limites d'une zone d'exclusion ne coupent pas une zone active telle que la source, la grille ou le drain d'un transistor.

10. Procédé selon l'une des revendications précédentes, **caractérisé en ce que** les dessins de masques comportent des motifs de correction optique de proximité, incluant des motifs de correction sur les limites des zones d'exclusion et zones associées.

## Patentansprüche

1. Fotolithographieverfahren für einen gegebenen Fotolithographievorgang auf einer Oberfläche, die nach einem gewünschten Mustermotiv (DE) belichtet werden soll, **dadurch gekennzeichnet, dass** es die folgenden Schritte umfasst: Erstellung eines ersten Maskenrohlings (BMI), der Fehler aufweisen kann, Erstellung einer individuellen Kartographie der Lage der Fehler (F) des ersten Maskenrohlings mithilfe einer Untersuchungsmaschine; Festlegung einer Ausschlusszone (ZE) rund um jeden Fehler und, je nach gewünschtem Mustermotiv und je nach den Musterregeln, Herstellung eines ersten Maskenmusters (M1) auf dem ersten Maskenrohling, wobei das erste Muster das gewünschte Mustermotiv enthält, außer in den Ausschlusszonen, die schwarz sind; Herstellung eines zweiten Maskenmusters (M2) auf einem zweiten Maskenrohling oder auf dem ersten Maskenrohling, wobei das zweite Maskenmuster ein ergänzendes Mustermotiv enthält, das in Zonen, die den Ausschlusszonen zugeordnet sind, Teile des gewünschten Mustermotivs enthält, wobei der Rest des zweiten Maskenmusters schwarz ist; abschließendes Durchführen eines Fotolithographie-Schritts mit dem ersten Maskenmuster auf der zu belichtenden Oberfläche und eines Fotolithographie-Schritts mit dem zweiten Maskenmuster, indem auf der zu belichtenden Oberfläche die Ausschlusszonen des ersten Musters und die zugeordneten Zonen des zweiten Musters übereinander gelegt werden.

2. Verfahren nach Anspruch 1, **dadurch gekennzeichnet, dass** das erste und das zweite Maskenmuster auf einem ersten bzw. einem zweiten Maskenrohling ausgebildet werden, wobei sich die zugeordneten Zonen des zweiten Maskenrohlings an denselben Stellen befinden wie die Ausschlusszonen auf dem ersten Maskenrohling.

3. Verfahren nach Anspruch 2, **dadurch gekennzeichnet, dass** ebenfalls eine Kartographie der Fehler des zweiten Maskenrohlings erstellt wird und überprüft wird, ob sich die Fehler des zweiten Maskenrohlings nicht in einer Ausschlusszone des ersten Maskenrohlings befinden.

4. Verfahren nach einem der Ansprüche 2 und 3, **dadurch gekennzeichnet, dass** die beiden Masken M1 und M2 auf ein und demselben Träger zusammengeführt werden.

5. Verfahren nach Anspruch 1, **dadurch gekennzeichnet, dass** das erste und das zweite Maskenmuster auf dem ersten Maskenrohling nebeneinander gelegt werden und der Maskenrohling zwischen den beiden Fotolithographie-Schritten seitlich verschoben wird, sodass auf der zu belichtenden Oberfläche die Ausschlusszonen des ersten Maskenmusters und die zugeordneten Zonen des zweiten Maskenmusters übereinander gelegt werden.

6. Verfahren nach einem der Ansprüche 1 bis 5, **dadurch gekennzeichnet**, das das erste und das zweite Maskenmuster ausgehend von einer ersten Musterdatei bzw. einer zweiten Musterdatei hergestellt werden, wobei diese beiden Dateien ausgehend von einer einzigen Datei, die das gewünschte Mustermotiv (DE) enthält, und ausgehend von der Lage eines jeden der Fehler (F), die auf dem ersten Maskenrohling festgestellt wurden, erstellt werden.

7. Verfahren nach Anspruch 6, **dadurch gekennzeichnet, dass** die erste und die zweite Datei unter Beachtung von Mustemegeln und darunter einer Auswahlregel für die Abmessungen der Ausschlusszone in Abhängigkeit von der Größe des festgestellten Fehlers, erstellt werden.

8. Verfahren nach einem der Ansprüche 6 und 7, **dadurch gekennzeichnet, dass** die erste und die zweite Datei unter Beachtung von Mustemegeln in Bezug auf das zu erstellende Muster selbst erstellt werden.

9. Verfahren nach Anspruch 8, **dadurch gekennzeichnet**, das die erste und die zweite Datei mit einer Regel erstellt werden, die vorschreibt, dass die Grenzen einer Ausschlusszone nicht durch eine aktive Zone wie Source, Gate oder Drain eines Transistors verlaufen dürfen.

10. Verfahren nach einem der vorangehenden Ansprüche, **dadurch gekennzeichnet, dass** die Maskenmuster "Optical proximity correction"-Motive umfassen, die Korrekturmotive an den Grenzen der Ausschlusszonen und zugeordneten Zonen einschließen.

## Claims

1. A photolithography method, **characterised in that** it comprises the following steps, for a given photolithography operation on a surface to be exposed according to a desired design pattern (DE): a first mask blank (BM1) is produced that may have defects, an individual mapping of the positions of the defects (F) of the first mask blank is established using an inspection machine; for each defect, an exclusion zone (ZE) is defined around the defect and, depending on the desired design pattern and depending on the design rules, a first mask design (M1) is produced on the first mask blank, the first design comprising the desired design pattern, except in the exclusion zones, the latter being black; and a second mask design (M2) is produced on a second mask blank or on the first mask blank, the second mask design comprising a coomplementary design pattern comprising, in zones asssociated with the exclusion zones, portions of the desired design pattern, the rest of the second mask design being black; finally, on the surface to be exposed, a photolithography step is performed with the first mask design and a photolithography step is performed with the second mask design, by superposing, on the surface to be exposed, the exclusion zones of the first design and the associated zones of the second design.

2. The method according to Claim 1, **characterised in that** the first and the second mask designs are formed respectively on a first and a second mask blank, the associated zones of the second mask blank being in the same positions as the exclusion zones in the first mask blank.

3. The method according to Claim 2, **characterised in that** mapping of the defects of the second mask blank is also established, and a check is carried out to ensure that the defects of the second mask blank are not located in an exclusion zone of the first mask blank.

4. The method according to either of Claims 2 and 3, **characterised in that** the two masks M1 and M2 are securely attached to one and the same support.

5. The method according to Claim 1, **characterised in that** the first and the second mask designs are juxtaposed on the first mask blank, and the mask blank is offset laterally betweeen the two photolithography steps so as to superpose, on the surface to be exposed, the exclusion zones of the first mask design and the associated zones of the second mask design.

6. The method according to any of Claims 1 to 5, **characterised in that** the first and the second mask designs are produced respectively from a first design file and from a second design file, these two files being established from one and the same file containing the desired design pattern (DE) and from the position of each of the defects (F) observed on the first mask blank.

7. The method according to Claim 6, **characterised in that** the first and the second files are established by taking into account design rules, and among these rules, a rule for choosing exclusion zone dimensions as a function of the size of the observed defect.

8. The method according to either of Claims 6 and 7, **characterised in that** the first and the second files are established by taking into account design rules linked to the actual design to be produced.

9. The method according to Claim 8, **characterised in that** the first and the second files are established with a rule dictating that the limits of an exclusion zone do not intersect an active zone such as the source, the gate or the drain of a transistor.

10. The method according to any of the preceding claims, **characterised in that** the mask designs comprise optical proximity correction patterns, including correction patterns on the limits of the exclusion zones and associated zones.
